# EUROPEAN PATENT APPLICATION

(11) **EP 2 568 431 A2**
(43) Date of publication of application: **13.03.2013**
(21) Application number: 11777523.9
(22) Date of filing: 27.04.2011
(51) Int. Cl.: G06Q 30/00

(54) **METHOD AND APPARATUS FOR PROVIDING ONLINE ADVERTISEMENT**

(30) Priority: 07.05.2010 KR 20100042732
(71) Applicant: Kim, An-Jong, Dongjak-gu, Seoul 156-090 (KR)
(72) Inventor: Kim, An-Jong, Dongjak-gu, Seoul 156-090 (KR)
(74) Representative: Sevinç, Erkan
(86) International application number: PCT/KR2011/003048
(87) International publication number: WO 2011/139042

(57) **Abstract**

The present invention relates to a method and an apparatus for providing online advertisements, in which a fade-in type advertisement window that becomes gradually clear over a preset time is provided to a specific region of the content area of the web page. The apparatus for providing the online advertisement according to the present invention includes a web page control module (310) configured to receive information about a displayed web page from a user terminal (100); an advertisement window setup unit (320) configured to set the type of an advertisement window, and to set the size of the advertisement window and an advertisement exposure location at which the advertisement window is to be displayed on the user terminal (100); an advertisement exposure speed setup unit (330) configured to set a time over which the advertisement window fades in; a database (350) configured to store advertising data to be sent to the user terminal (100); and a control unit configured to control the individual elements and to transmit the advertisement window to the user terminal.

According to the method for providing advertisements using a fade-in advertisement window in accordance with the present invention, the advertisement window is provided such that the advertisement window is gradually clearly exposed to the user while the user is viewing the web page, thereby heightening the interest of the user in the advertisement.

## Description

### Technical Field

The present invention relates to a method and apparatus for providing online advertisements and, more particularly, to a method and apparatus for providing online advertisements, which provide a fade-in type advertisement window that gradually becomes clearer over a preset time in a specific region of the content area of a web page.

### Background Art

With the development of communication networks such as online and mobile communication networks, advertisements that were once provided only via broadcasting media, such as TV or radio, or printed media, such as newspapers and magazines, are being provided in a variety of forms.

In particular, as online and mobile communication users has been increasing in geometric progression thanks to the development of communication networks, online advertising has become one of the very important advertisement means. Online advertisements are provided in a variety of forms, such as displaying an advertisement in a predetermined region, as in the case of a banner advertisement on a website, or providing an advertisement via a pop-up window when a specific website is accessed.

Furthermore, a variety of methods, such as a method of extracting a specific word, that is, a keyword, from words entered by a user in a search window online or words or sentences included in a specific web page of a website and providing a list of corresponding websites or pieces of advertising data, such as advertisement content itself, which match the keyword, are being used.

Meanwhile, this type of online advertising is problematic in that it is difficult to check whether a corresponding online advertisement has been exposed to a user or whether a user has viewed the corresponding online advertisement.

In particular, an advertisement that is inserted into a web page and then provided has a problem in that it is difficult to check whether the advertisement has been exposed to the user because it is difficult to check whether a user has viewed a web page up to the part of the web page in which the advertisement is placed within the corresponding web page. Furthermore, the advertisement has disadvantages in that the size of an advertisement has to be a predetermined size because of a limited advertising region because advertising is possible only when a specific region of a web page is secured, so that a lot of information cannot be displayed and advertising is not possible when a further advertisement space is not secured.

Furthermore, pop-up advertising is a scheme for popping up an advertising window when a user opens a specific web page. Although the pop-up advertising is advantageous in that it is known to attract more attention than banner advertising and is not limited to a specific size, it is problematic in that it has the adverse effect that a user has a feeling of rejection because the user has to close advertisement windows by clicking one by one when advertisements unwanted by the user pop up and in that the loading speed of a web page desired by a user decreases depending on advertising content.

### Disclosure

### Technical Problem

Accordingly, the present invention has been made to solve the above problems, and an object of the present invention is to provide a method and apparatus for providing online advertisements, which provide a fade-in type advertisement window that gradually becomes clearer over a time preset in a specific region of the content area of a web page.

Another object of the present invention is to provide a method and apparatus for providing online advertisements in a form in which an advertisement window is deleted only when a scroll bar is being manipulated and the advertisement window appears in a fade-in form, a sliding form or a pop-up form only when the scroll bar is fixed, that is, in a form in which an advertisement disappears when scrolling is performed using a mouse/keyboard and the advertisement appears when the scrolling stops.

### Technical Solution

In order to accomplish the above objects, the present invention provides an apparatus for providing online advertisements, including an advertisement window setting unit configured to set an advertisement type of an advertisement window to a banner advertisement type or a bar advertisement type, and to set a size of the advertisement window and an advertisement exposure location at which the advertisement window will be displayed on a user terminal; an advertisement exposure speed setting unit configured to set a time over which the advertisement window fades in; a database configured to store advertising data to be sent to the user terminal; a control unit configured to control the individual elements so that the advertisement window is sent to the user terminal; and a web page control module configured to receive information about a web page, including information about clicking of a mouse, information about status of a scroll bar, and information about a location of the scroll bar, to display no advertisement window when the scroll bar is being manipulated or has been placed at a specific location, and to display the advertisement window in a fade-in form by increasing transparency of the advertisement window from a transparent state to an opaque state over a predetermined time when the scroll bar is fixed.

The present invention provides a method of providing online advertisements, including a first step of an advertisement window setting unit and an advertisement exposure speed setting unit setting a type of an advertisement window to a banner advertisement type or a bar advertisement type, and setting a size of the advertisement window, an advertisement exposure location and a time over which the advertisement window fades in, which are information about an advertisement to be provided to a user terminal; a second step of, when a web document is sent to the user terminal via a web server, a web page control module receiving information about a web page, including information about clicking of a mouse, information about status of a scroll bar, and information about a location of the scroll bar; a third step of a control unit determining the transmission time and sending the advertisement window in which the information about the advertisement has been previously set to the user terminal; and a fourth step of the web page control module determining the information about status of the scroll bar and information about a location of the scroll bar, displaying no advertisement window when the scroll bar is being manipulated or has been placed at a specific location, and displaying the advertisement window in a fade-in form when the scroll bar is fixed.

### Advantageous Effects

According to the method of providing an advertisement using a fade-in advertisement window according to the present invention, which responds to scrolling, a user's interest in an advertisement may be increased because an advertisement window is provided to be gradually more clearly exposed to the user while the user is viewing a web page and an advertisement disappears when the user scrolls the advertisement window.

Furthermore, according to the present invention, an advertising effect may be easily measured because an additional space for an advertisement on a web page is not necessary and an advertisement is exposed only when a user stops scrolling and views the web page.

### Description of Drawings

FIG. 1 is a diagram showing the configuration of a system for providing online advertisements according to a preferred embodiment of the present invention;
FIGS. 2 to 6 are diagrams showing examples of the order in which a method of providing online advertisements according to a preferred embodiment of the present invention is implemented;
FIG. 7 is a diagram showing an example of the order in which a method of providing online advertisements according to another preferred embodiment of the present invention is implemented; and
FIG. 8 is a flowchart showing the order in which a method of providing online advertisements according to a preferred embodiment of the present invention is implemented.

### Mode for Invention

Preferred embodiments of the present invention capable of realizing the objects concretely will be described below with reference to the accompanying drawings.

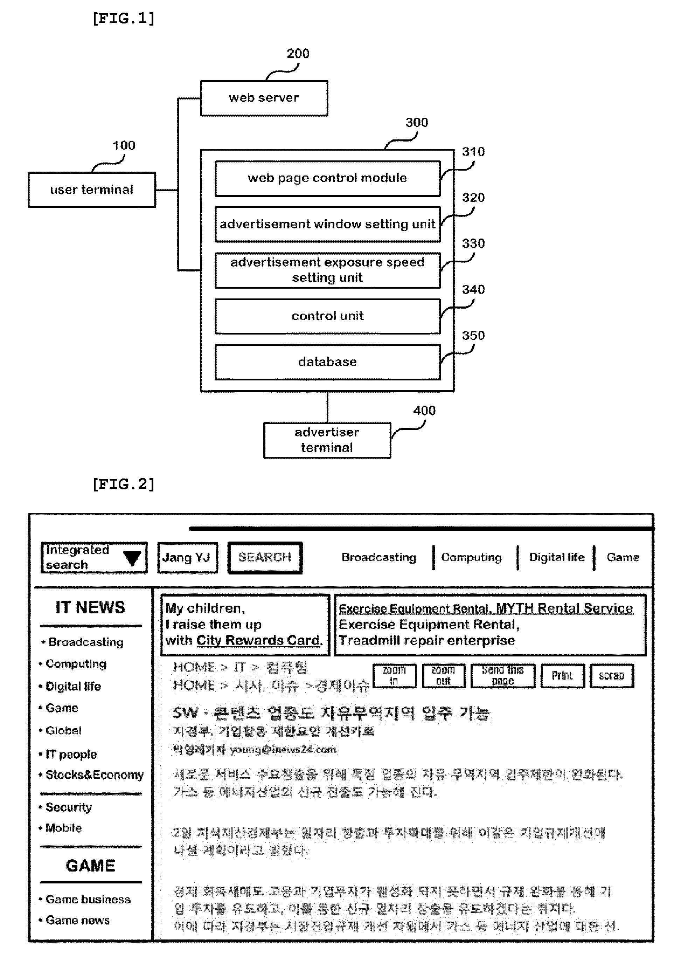

FIG. 1 is a diagram showing the configuration of a system for providing online advertisements according to a preferred embodiment of the present invention.

As shown in FIG. 1, the system for providing online advertisements according to the preferred embodiment of the present invention may include a user terminal 100, a web server 120, an advertising server 300, and an advertiser terminal 400.

The user terminal 100 is a device that is connected to the web server 120 and the advertising server 300 over a communication network 150 and that is able to receive web documents, such as web pages provided by the web server 120, and advertising data provided by the advertising server 300.

The user terminal 100 includes a web browser (not shown) that enables access to the web server 120, and advertising data may be played back by the web browser.

The user terminal 100 is not limited to a specific device, but may be any device as long as it includes communication functionality, can access the web server 120 and the advertising server 300 and can play back received advertising data on a web using the web browser, and includes a display screen onto which the played advertising data is output.

Meanwhile, it is apparent that the advertising data in the present invention may include all types and kinds of advertising data, including not only advertisements provided in the form of text or images but also advertisements provided in voice form, and also advertisements in a form in which voice is provided along with text or an image or along with both text and an image.

The user terminal 100 may be, for example, a wireless terminal, such as a Personal Computer (PC), a mobile phone, or a Personal Digital Assistant (PDA), but is not limited thereto.

Meanwhile, when the user terminal 100 accesses a web page on a web browser, a location at which an advertisement will be provided within the web page is determined and set first, the type and size of an advertisement window, such as an advertisement exposure speed, a banner advertisement, or a bar advertisement, are previously set, and the set advertisement window is provided in a form, such as a fade-in form in which the set advertisement window becomes gradually clearer at the set advertisement exposure speed.

At this time, when a user scrolls the body content of the web page on the user terminal 100 using a mouse or keyboard, the advertisement window including the advertising data disappears. When the scrolling stops, the advertisement window appears again in a fade-in form. Here, information about the status of a scroll bar in the user terminal 100 is sent to the advertising server 300, and a method in which the advertising server 300 sends the advertisement window including advertising data is possible.

Furthermore, as another embodiment, a web page control module for collecting information about a web page and controlling the information may be installed in the user terminal 100. The web page control module may be provided to the user terminal 100 in the form of scripts that can operate in a web browser.

The user terminal 100 is connected to the web server 200 and the advertising server 300 over the communication network 150. The communication network 150 in the present invention includes online and mobile communication networks, and the online network includes all worldwide open type network structures that support a TCP/IP protocol and a variety of services in the higher layers of the TCP/IP protocol, that is, a Hyper Text Transfer Protocol (HTTP), Telnet, a File Transfer Protocol (FTP), a Domain Name System (DNS), a Simple Mail Transfer Protocol (SMTP), a Simple Network Management Protocol (SNMP), and Network File Service (NFS).

Furthermore, the mobile communication network further includes elements, such as an access gateway and a Packet Data Serving Node (PDSN) which enable wireless packet data to be transmitted and received, in addition to a Base Station (BS), a Mobile Telephone Switching Office (MTSO), and a Home Location Register (HLR).

The web server 120 provides web documents, such as web pages via which advertisements are provided, via the user terminal 100.

The advertising server 300 sends an advertisement window, including preset advertising data, to the user terminal 100 when information about web pages is collected based on information about tags within web pages provided by the web server. The advertising server 300 includes a web page control module 310, an advertisement window setting unit 320, an advertisement exposure speed setting unit 330, a control unit 340, and a database 350.

The web page control module 310 collects information about web pages, each including one or more of information about the clicking of a mouse, information about the state of a scroll bar, and information about the location of a scroll bar, from the user terminal 100. The information about web pages may be called information input from the user terminal because it may be information received from a user via a mouse or a keyboard. The information about the state of a scroll bar and the information about the location of a scroll bar may be extracted from the attributes of a web page and is information received from the user via a mouse or a keyboard. Whether the scroll bar is in an operating state or a fixed state and the location at which the scroll bar is placed may be determined based on the received information. That is, the information about the clocking of a mouse includes information about whether a mouse has been clicked on the text of a web page and information about the location of a cursor. The information about the state of a scroll bar includes information about whether the scroll bar has been driven by a mouse wheel or keyboard. The information about the location of a scroll bar includes information about the location of a scroll bar which indicates whether the body content of a web page is now being displayed back.

Furthermore, once the information about a web page is collected, the web page control module 310 controls the operation of the advertisement window in response thereto. That is, control may be performed such that when the scroll bar operates, the advertisement window is removed and such that when the operation of the scroll bar stops, the advertisement window is caused to pop up again or is prevented from appearing at a specific location on the web page.

The web page control module 310 is installed in the advertising server 300, and may transmit and receive information about web pages and information about the control of the web pages using the tags of the web pages. Furthermore, as another embodiment, the web page control module 310 is installed in the user terminal 100 in the form of scripts that may operate in a web browser, and may collect information about web pages and control the web pages.

The advertisement window setting unit 320 sets the type of advertisement window, including advertising data, to a banner advertisement type or a bar advertisement type, and determines the size of the advertisement window and an advertisement exposure location at which the advertisement window will be displayed on the user terminal 100.

The advertisement exposure speed setting unit 330 increases the transparency of the advertisement window from a transparent state to an opaque state over a preset time so that the advertisement window appears in a fade-in form, and sets the time for which the advertisement window fades in.

The database 350 stores advertising data to be sent to the user terminal 100.

The control unit 340 controls the individual elements so that an appropriate advertisement window is sent to the user terminal, determines advertising data suitable for a web page displayed on the user terminal, sends an advertisement window, including advertising data from the database 350, when the web page is sent to the user terminal 100, and displays an advertisement site set in advertisement window in response to the operation of the mouse of the user terminal 100.

For example, it may be possible for the control unit 340 to determine the time at which a user has completely received a web page or when the location of a scroll bar has reached a specific location to be the time at which an advertisement window is sent, and to send the advertisement window at the determined time. Furthermore, the control unit 340 may display an advertisement site set in the advertisement window when the cursor of a mouse is placed in an advertisement window or a mouse click occurs on an advertisement window.

The advertiser terminal 400 is responsible for requesting an advertisement from the advertising server 300 in order to render advertising on a web page via an advertisement window.

FIGS. 2 to 6 are diagrams showing examples of the order in which a method of providing online advertisements according to a preferred embodiment of the present invention is implemented.

As illustrated in FIG. 2, a screen that comes into first contact with a user via the screen of a web browser is a web page that is received via the web server 200. A banner advertisement type of advertisement window, the size of the advertisement window, and an advertisement exposure location at which the advertisement window will be displayed on the user terminal 100 are previously set and stored in all web pages 300. Furthermore, the time over which the advertisement window fades in is previously set.

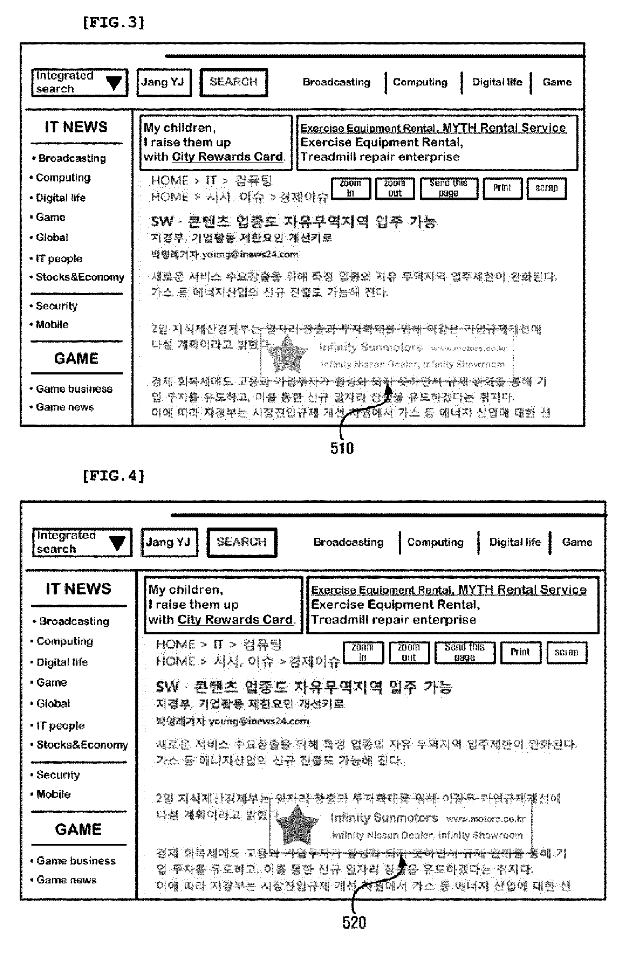

As illustrated in FIG. 3, when the user terminal 100 has fully received the web page or web page information indicating that a mouse is placed at a specific location is collected, the control unit sends the advertisement window. The advertisement window appears on the lower side of the present content area of the web page displayed on the user terminal in the form of a banner having very high transparency based on a preset transparency.

As illustrated in FIG. 4, an advertisement window changing from a transparent state to a translucent state appears while the transparency of the advertisement window changes over the fade-in time set in the advertisement exposure speed control unit.

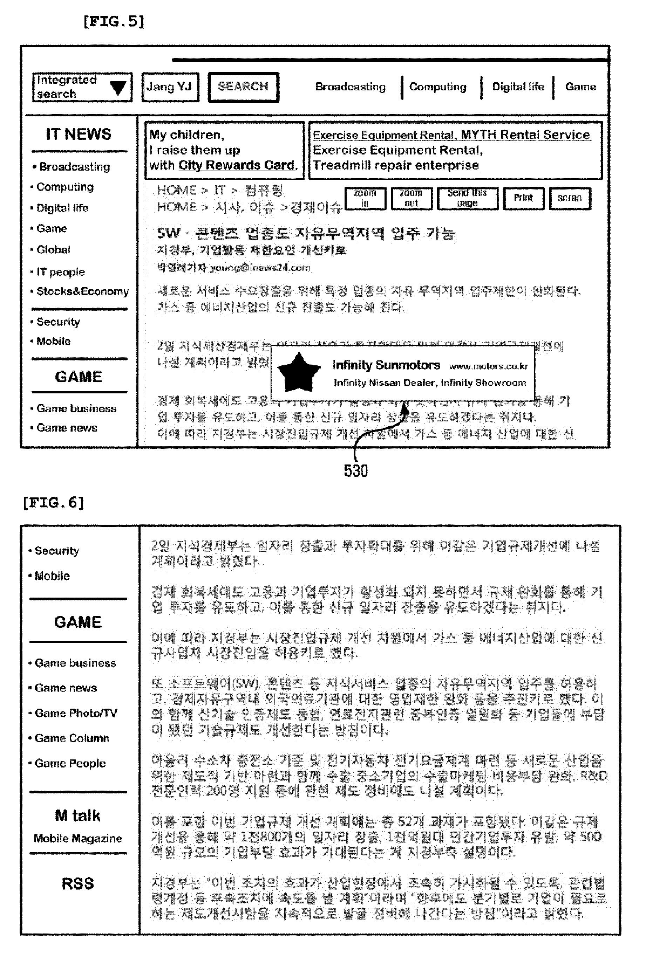

As illustrated in FIG. 5, once the fade-in time set in the advertisement exposure speed control unit has elapsed, the advertisement window changes to a fully translucent state, and only the advertisement window is clearly displayed without the content area of the web page, thereby being exposed to the user on the screen of the web browser.

As illustrated in FIG. 6, when the user moves a scroll bar up and down or to the left and right using a mouse wheel or a keyboard on the user terminal 100, the web page control module 310 detects the operation of the scroll bar, and performs control so that the advertisement window disappears from the web page. Accordingly, the advertisement window disappears from the web page where the advertisement window is displayed to the user, and therefore the exposure of the advertisement is stopped. Furthermore, when the operation of the scroll bar stops, the web page control module 310 may perform control so that the advertisement window appears again.

Furthermore, the advertisement window may be prevented from appearing on the part of the web page at a specific location, so that the exposure of an advertisement in a web page viewed by a user stops as described above.

As illustrated in FIGS. 2 to 6, according to the method of providing an advertisement using a fade-in advertisement window according to the present invention, an advertisement window is provided such that it is gradually clearly exposed to a user while the user is viewing a web page, so that the user's interest in an advertisement can be heightened. Furthermore, an additional space for an advertisement on a web page is not necessary, and the advertising effect can be easily quantified because the advertisement is exposed only when a user views a web page.

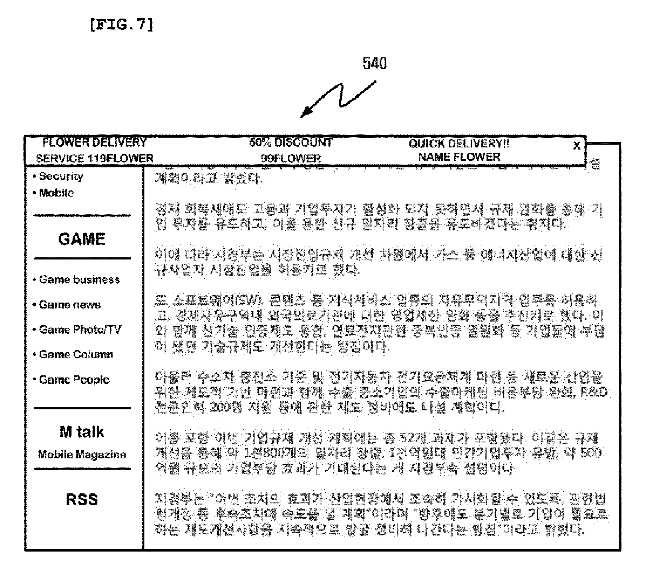

FIG. 7 is a diagram showing an example of the order in which a method of providing online advertisements according to another preferred embodiment of the present invention is implemented.

As illustrated in FIG. 7, a screen that comes into first contact with a user via the screen of a web browser is a web page that is received via the web server 200. A banner advertisement type of advertisement window, the size of the advertisement window, and an advertisement exposure location at which the advertisement window will be displayed on the user terminal 100 are previously set and stored in the web page 300. Furthermore, the time over which the advertisement window fades in is also previously set. When a scroll bar has reached a specific location at which an advertisement is exposed within the web page viewed by the user if the user moves the scroll bar using a mouse wheel or a keyboard, a preset bar-type advertisement window is gradually displayed downwards from the upper side of the content area of the web page over the preset time.

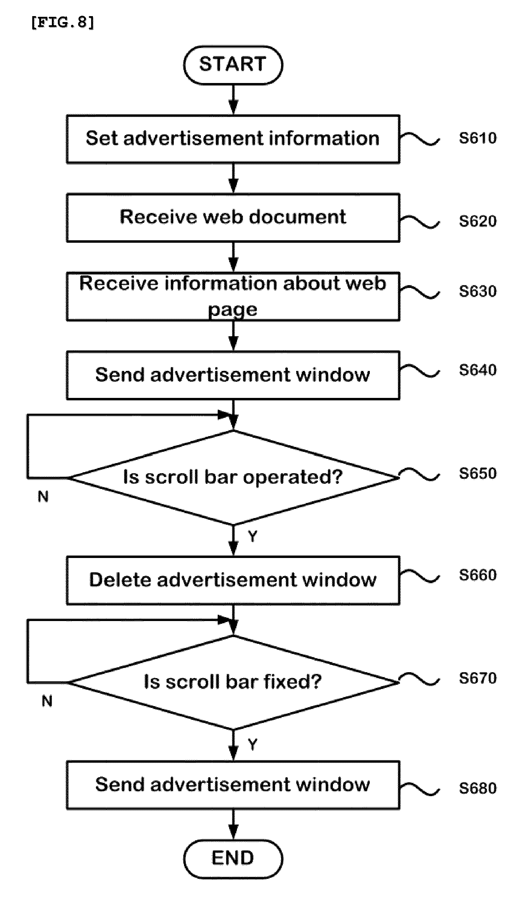

FIG. 8 is a flowchart showing the order in which a method of providing online advertisements according to a preferred embodiment of the present invention is implemented.

FIG. 8 shows the order of the online advertisement providing method in which information about a web page is received from the user terminal 100 and the advertising server 300 sends an advertisement window.

As shown in FIG. 8, first, the advertisement window setting unit 320 sets the type of advertisement window, including advertising data, to a banner advertisement type or a bar advertisement type, and sets the size of the advertisement window and an advertisement exposure location at which the advertisement window will be displayed on the user terminal 100. The advertisement exposure speed setting unit 330 sets the time over which the advertisement window fades in (S610).

A web page provided via the web server 120 is sent to the user terminal 100 and is then received (S620). A part or all of the web page is provided via the screen of a web browser that is installed in the user terminal 100.

The web page control module 310 collects information about whether the reception of the web page has been completed from the user terminal 100, information about the clicking of a mouse, information about the status of a scroll bar, and information about the location of the scroll bar (S630). The control unit 340 determines the time at which the advertisement window will be sent based on the information about the web page. Here, the time at which the advertisement window will be sent is determined depending on the type of advertisement window to be sent. It is preferred that the time at which the advertisement window will be sent be early in the case of a banner advertisement and the time at which the advertisement window will be sent be late in the case of a bar advertisement.

Furthermore, as another embodiment, if the web page control module 310 is installed in the user terminal 100, the web page control module 310 sends the information about the web page to the control unit 340 of the advertising server. The control unit 340 determines the time at which the advertisement window will be sent based on the information about the web page.

The control unit 340 of the advertising server 300 sends the advertisement window, including preset advertising data, when the time at which the advertisement window will be sent is reached, so that the advertising data is displayed on the display screen of the user terminal 100 (S640). The advertisement window having the preset advertisement window type and size is displayed in a fade-in form at the preset advertisement exposure location over the preset fade-in time.

The web page control module 310 detects information about the status of the scroll bar of the user terminal 100, that is, information about whether the scroll bar is being manipulated by the mouse or keyboard. When the scroll bar is being manipulated (S650), the web page control module 310 deletes the advertisement window (S660).

The web page control module 310 detects the status of the scroll bar of the user terminal 100, that is, information about whether the scroll bar is being manipulated by the mouse or keyboard. When the operation of the scroll bar stops and the scroll bar is fixed (S670), the web page control module 310 sends an advertisement window, including preset advertising data, so that the advertising data is displayed on the display screen of the user terminal 100 (S680). In this case, likewise, the advertisement window having the preset advertisement window type and size is displayed in a fade-in form at the preset advertisement exposure location over the preset fade-in time.

The present invention is not limited to the above-described embodiments, but, as can be seen from the following claims, those skilled in the art may modify the embodiments and those modifications fall within the scope of the invention.

## Claims

1. An apparatus for providing online advertisements, comprising:
an advertisement window setting unit configured to set an advertisement type of an advertisement window to a banner advertisement type or a bar advertisement type, and to set a size of the advertisement window and an advertisement exposure location at which the advertisement window will be displayed on a user terminal;
an advertisement exposure speed setting unit configured to set a time over which the advertisement window fades in;
a database configured to store advertising data to be sent to the user terminal;
a control unit configured to control the individual elements so that the advertisement window is sent to the user terminal; and
a web page control module configured to receive information about a web page, including information about clicking of a mouse, information about status of a scroll bar, and information about a location of the scroll bar, to display no advertisement window when the scroll bar is being manipulated or has been placed at a specific location, and to display the advertisement window in a fade-in form by increasing transparency of the advertisement window from a transparent state to an opaque state over a predetermined time when the scroll bar is fixed.

2. A method of providing online advertisements, comprising:
a first step of an advertisement window setting unit and an advertisement exposure speed setting unit setting a type of an advertisement window to a banner advertisement type or a bar advertisement type, and setting a size of the advertisement window, an advertisement exposure location and a time over which the advertisement window fades in, which are information about an advertisement to be provided to a user terminal;
a second step of, when a web document is sent to the user terminal via a web server, a web page control module receiving information about a web page, including information about clicking of a mouse, information about status of a scroll bar, and information about a location of the scroll bar;
a third step of a control unit determining the transmission time and sending the advertisement window in which the information about the advertisement has been previously set to the user terminal; and
a fourth step of the web page control module determining the information about status of the scroll bar and information about a location of the scroll bar, displaying no advertisement window when the scroll bar is being manipulated or has been placed at a specific location, and displaying the advertisement window in a fade-in form when the scroll bar is fixed.
